# EUROPEAN PATENT APPLICATION

(11) **EP 2 685 732 A1**
(43) Date of publication of application: **15.01.2014**
(21) Application number: 12305843.0
(22) Date of filing: 12.07.2012
(51) Int. Cl.: H04N 13/04

(54) **Stereoscopic pictures generation**

(71) Applicant: ESSILOR INTERNATIONAL (Compagnie Générale d'Optique), 94220 Charenton le Pont (FR)
(72) Inventor: Rousseau, Denis, 94220 Charenton le Pont (FR)
(74) Representative: Huisman, Aurélien

(57) **Abstract**

A stereoscopic pictures generating method comprising:
- a providing step during which at least one user related parameter is provided,
- a determining step during which a pictures parameter is determined based on the at least one user related parameter, and
- a generating step during which right and left stereoscopic pictures are generating based on the pictures parameter, the right and left stereoscopic pictures being to be displayed on a screen.

## Description

The invention relates to a generation of stereoscopic pictures.

The discussion of the background of the invention herein is included to explain the context of the invention. This is not to be taken as an admission that any of the material referred to was published, known or part of the common general knowledge at the priority date of any of the claims.

Stereoscopic pictures generating system may present the drawback of not being optimized for the user of said system.

Consequently, it can quickly give rise to the user suffering dizziness and nausea.

One object of the invention is to provide stereoscopic pictures generating system and method that do not present the drawbacks mentioned hereinabove.

In particular, one object of the invention is to provide stereoscopic pictures generating system and method enabling 3D information content to be viewed while limiting visual fatigue and discomfort for the user of said system.

To this end, the invention proposes a stereoscopic pictures generating method comprising:
- a providing step during which at least one user related parameter is provided,
- a determining step during which a pictures parameter is determined based on the at least one user related parameter, and
- a generating step during which right and left stereoscopic pictures are generating based on the pictures parameter, the right and left stereoscopic pictures being to be displayed on a screen.

Thus, right and left stereoscopic pictures are generating based on at least one user related parameter so that said user views the information content under conditions that are best adapted to the user's physiology. Consequently, the physiological fatigue is minimized.

The at least one user related parameter may comprise the interpupillary distance of the user in intermediary vision, and/or the distance between the user and the screen.

The screen may be designed to display right and left videos, each video comprising a set of pictures, the providing step being repeated several times during right and left videos generation.

The providing step may comprise an obtaining operation during which the at least one user related parameter is obtained from a device storing the user related parameter.

Alternatively, the providing step may comprise a measurement operation during which the at least one user related parameter is measured.

In some embodiments, the measurement operation is performed by using right and left cameras embedded in a binocular viewing device designed to be worn by the user.

In other embodiments, the measurement operation is performed by using a camera embedded in the screen.

The pictures parameter may comprise a distance to be set between two cameras embedded in the screen and designed to provide the right and left pictures, and/or a display positioning of the right picture on the screen and a display positioning of the left picture on the screen.

In some embodiments of the invention, for instance in case of videoconference, the providing step comprises a first providing operation during which at least one first user related parameter is provided, and a second providing operation during which at least one second user related parameter is provided.

In these embodiments of the invention, the determining step comprises a first determining operation during which a first distance to be set between two cameras embedded in a screen facing the second user is determined based on the first user related parameter, and a second determining operation during which a second distance to be set between two cameras embedded in a screen facing the first user is determined based on the second user related parameter.

Moreover, in these embodiments of the invention, the generating step comprises a first generating operation during which right and left stereoscopic pictures are generating based on the first distance, the right and left stereoscopic pictures being to be displayed on the screen facing the first user, a second generating operation during which right and left stereoscopic pictures are generating based on the second distance, the right and left stereoscopic pictures being to be displayed on the screen facing the second user.

The invention also relates to a computer program product comprising one or more stored sequences of instructions that are accessible to a processor and which, when executed by the processor, causes the processor to carry out steps of the method.

The invention also relates to a computer readable medium carrying one or more sequences of instructions of the computer program product.

The invention also relates to a stereoscopic pictures generating system comprising:
- providing means configured to provide at least one user related parameter,
- determining means configured to determine a pictures parameter based on the at least one user related parameter, and
- generating means configured to generate right and left stereoscopic pictures based on the pictures parameter, the right and left stereoscopic pictures being to be displayed on a screen.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

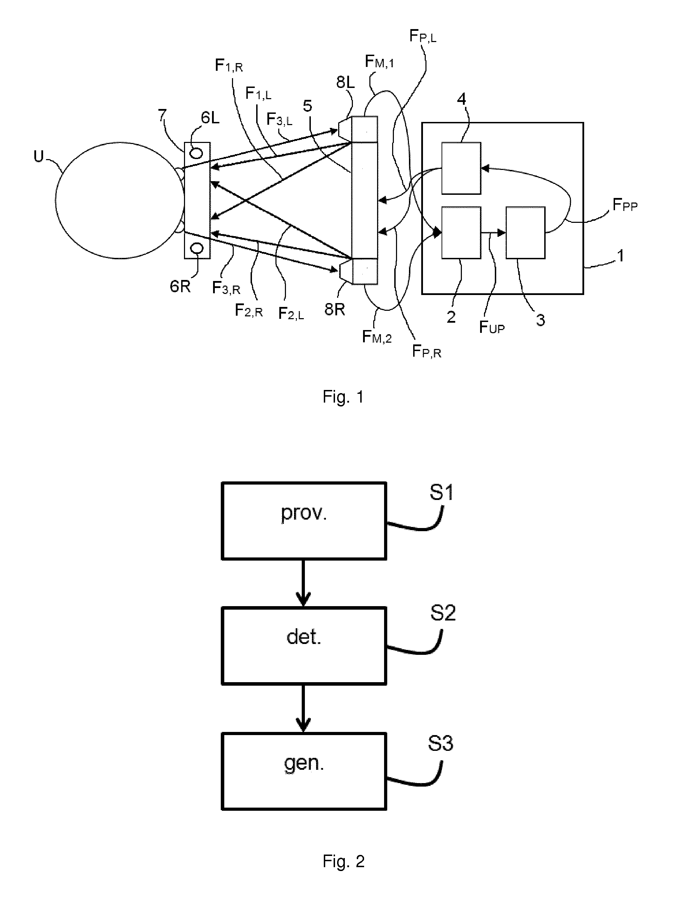

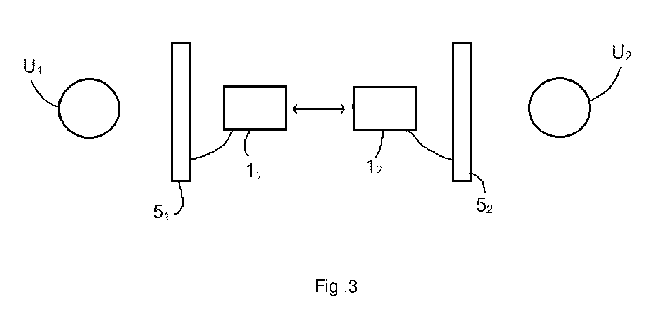

Non limiting embodiments of the invention will now be described with reference to the accompanying drawing wherein:
o Figure 1 is a schematic block diagram representing a user, a binocular viewing device, a screen, and a stereoscopic pictures generating system according to some embodiments of the invention,
o Figure 2 is a flow chart showing steps of a stereoscopic pictures generating method according to some embodiments of the invention, and
o Figure 3 is a schematic block diagram showing two users handling a videoconference using two stereoscopic pictures generating systems.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

Figure 1 shows a user U, a binocular viewing device 7, a screen 5, and a stereoscopic pictures generating system 1 according to some embodiments of the invention.

The screen 5 is designed to perform stereoscopic display, for example active stereoscopic display (shutter), passive stereoscopic display (polarization), autostereoscopic display, or other.

The system 1 comprises providing means 2 configured to provide at least one user related parameter.

For instance, the at least one user related parameter may comprise the interpupillary distance of the user U in intermediary vision. The interpupillary distance is defined in the standard ISO 13666:1998.

According to some embodiments of the invention, the providing means 2 are configured to obtain the at least one user related parameter from a measurement.

The measurement may be performed by using right and left cameras 6_{L} and 6_{R} embedded in the binocular viewing device 7, which is designed to be worn by the user U. This measurement may thus be performed without the use of cameras embedded in the screen 5. The measurement is then transmitted from the binocular viewing device 7 to the providing means 2 by means of any type of connection, for example a wireless connection.

Alternatively, the measurement may be performed by using a camera 8_{L} or 8_{R} embedded in the screen 5 and two benchmarks provided on the binocular viewing device 7. Arrows F_{1,L} and F_{1,R} are symbolizing such a measurement performed by camera 8_{L}. Similarly, arrows F_{2,L} and F_{2,R} are symbolizing such a measurement performed by camera 8_{R}. This measurement may be performed with the use of a single camera embedded in the screen 5. The measurement is then transmitted from the screen 5 to the stereoscopic pictures generating system 1 by means of any type of connection, for example a wireless connection, as symbolized by arrows F_{M,1} and F_{M,2}.

Alternatively, the measurement may be performed by using two camera 8_{L} and 8_{R} embedded in the screen 5, as symbolized by arrows F_{3,L} and F_{3,R}. This measurement may be performed without the use of a binocular viewing device 7. The measurement is then transmitted from the screen 5 to the stereoscopic pictures generating system 1 by means of any type of connection, for example a wireless connection, as symbolized by arrows F_{M,1} and F_{M,2}.

The at least one user related parameter may further or instead comprise the distance between the user U and the screen 5 facing the user U, that is to say the image display distance. The at least one user related parameter may further or instead comprise an eyes orientation of the user U. Such a measurement may be performed by using one or two camera(s) 8_{L}, 8_{R} embedded in the screen 5.

The measurement may be performed periodically, for instance during right and left videos generation. It is thus possible to obtain a current position of the user U, for instance when the user U is playing a videogame.

According to other embodiments of the invention, the providing means 2 are configured to obtain the at least one user related parameter from a device storing the user related parameter. The device storing the user related parameter may be embedded in the system 1 or may be a remote device configured to communicate with the system 1.

The system 1 further comprises determining means 3 configured to receive the at least one user related parameter, as symbolized by arrow F_{UP}, and to determine a pictures parameter based on the at least one user related parameter.

For instance, when two cameras 8_{L}, 8_{R} are embedded in the screen 5, the determining means 3 may be configured to determine a distance to be set between the two cameras 8_{L}, 8_{R}.

The determining means 3 may further or instead be configured to determine a display positioning of a right picture on the screen 5 and a display positioning of a left picture on the screen 5.

The system 1 further comprises generating means 4 configured to receive the pictures parameter, as symbolized by arrow Fpp, and to generate right and left stereoscopic pictures based on the pictures parameter.

For instance, when the generating means 4 are configured to generate the right and left pictures based on a determined right and left display positioning, the right and left pictures may be generated by setting picture margins based on the determined right and left display positioning.

When the generating means 4 are configured to generate the right and left pictures based on a distance to be set between the two cameras 8_{L}, 8_{R}, the generating means 4 may transmit a command signal to the screen 5 to set the positions of the two cameras 8_{L}, 8_{R}.

Then, the generated right and left stereoscopic pictures are displayed on a screen.

In some embodiments of the invention, the screen displaying the right and left pictures is the screen 5 facing the user U associated to the user related parameter. In these embodiments of the invention, the generated pictures are transmitted from the generating means 4 to the screen 5, as symbolized by arrows F_{P,L} and F_{P,R}. The display may thus be set as a function of the morphology of the user U and/or the position of the user U relative to the screen 5, for example when the user U is playing a videogame or watching a movie.

According to other embodiments of the invention, the screen displaying the right and left pictures is a second screen facing a second user. The pictures generation may thus be adapted as a function of a second user, for example when the user U and the second user are handling a videoconference.

According to an embodiment of the invention illustrated on figure 2, the stereoscopic pictures generating method according to the invention comprises:
- a providing step S1,
- a determining step S2, and
- a generating step S3.

The stereoscopic pictures generating method may be implemented by the stereoscopic pictures generating system 1 disclosed above.

During the providing step S1 at least one user related parameter is provided.

The providing step S1 may comprise a measurement operation during which the user related parameter is measured, or an obtaining operation during which the at least one user related parameter is obtained from a device storing the user related parameter.

For instance, the user related parameter is measured during a first implementation of the method and then is stored to be reused.

During the determining step S2 a pictures parameter is determined based on the at least one user related parameter provided in step S1.

The pictures parameter may comprise, for instance, a distance to be set between two cameras 8_{L} and 8_{R} embedded in the screen 5, and/or a display positioning of the right picture on the screen 5 and a display positioning of the left picture on the screen 5.

During the generating step S3 right and left stereoscopic pictures are generating based on the pictures parameter.

Then, the right and left stereoscopic pictures are transmitted to a screen to be displayed.

Figure 3 represents an example embodiment where a first user U₁ and a second user U₂ are handling a videoconference.

The first user U₁ is facing a first screen 5₁ and the second user U₂ is facing a second screen 5₂. A first stereoscopic pictures generating system 1₁ is connected to the first screen 5₁ A second stereoscopic pictures generating system 1₂ is connected to the second screen 5₂. The connections may be wireless connections. The first stereoscopic pictures generating system 1₁ and the second stereoscopic pictures generating system 1₂ are configured to communicate with one another, for instance by using the Internet.

The right and left videos showing the first user U₁, called first right and left videos, are provided from right and left cameras embedded in the first screen 5₁. The right and left videos showing the second user U₂, called second right and left videos, are provided from right and left cameras embedded in the second screen 5₂. The first right and left videos are thus displayed on the second screen 5₂ while the second right and left videos are displayed and the first screen 5₁.

In this example embodiment, the providing step S1 comprises a first providing operation during which at least one first user U₁ related parameter is provided. The first user related parameter comprises the interpupillary distance of the first user U₁ in intermediary vision. The first providing operation may be performed by the providing means of the first stereoscopic pictures generating system 1₁.

Moreover, the providing step S1 comprises a second providing operation during which at least one second user U₂ related parameter is provided. The second user related parameter comprises the interpupillary distance of the second user U₂ in intermediary vision. The second providing operation may be performed by the providing means of the second stereoscopic pictures generating system 12_{.}

The determining step S2 comprises a first determining operation during which a first pictures parameter is determined based on the first user related parameter. The first picture parameter comprises a first distance to be set between the two cameras embedded in the second screen 5₂. The first determining operation may be performed by the determining means of the first stereoscopic pictures generating system 1₁. In that case the first pictures parameter is then transmitted to the second stereoscopic pictures generating system 1₂. Alternatively, the first user related parameter may be transmitted to the second stereoscopic pictures generating system 1₂ and the first determining operation may be performed by the determining means of the second stereoscopic pictures generating system 1₂.

Moreover, the determining step S2 comprises a second determining operation during which a second pictures parameter is determined based on the second user related parameter. The second picture parameter comprises a second distance to be set between the two cameras embedded in the first screen 5₁. The second determining operation may be performed by the determining means of the second stereoscopic pictures generating system 1₂. In that case the second pictures parameter is then transmitted to the first stereoscopic pictures generating system 1₁. Alternatively, the second user related parameter may be transmitted to the first stereoscopic pictures generating system 1₁ and the second determining operation may be performed by the determining means of the first stereoscopic pictures generating system 1₁.

The generating step S3 comprises a first generating operation during which first right and left stereoscopic pictures are generating. The first right and left pictures are provided from the two cameras embedded in the first screen 5₁, the distance between the two cameras being set according to the second pictures parameter. The first generating operation may be performed by the generating means of the first stereoscopic pictures generating system 1₁. The first right and left pictures are then transmitted to the second screen 5₂, and displayed on the second screen 5₂. As the distance between the two cameras embedded in the first screen 5₁ has been set as a function of the interpupillary distance of the second user U₂, the first right and left pictures are specifically adapted to the second user.

Moreover, the generating step S3 comprises a second generating operation during which second right and left stereoscopic pictures are generating. The second right and left pictures are provided from the two cameras embedded in the second screen 5₂, the distance between the two cameras being set according to the first pictures parameter. The second generating operation may be performed by the generating means of the second stereoscopic pictures generating system 1₂. The second right and left pictures are then transmitted to the first screen 5₁, and displayed on the first screen 5₁. As the distance between the two cameras embedded in the second screen 5₂ has been set as a function of the interpupillary distance of the first user U₁, the first right and left pictures are specifically adapted to the first user.

The invention has been described above with the aid of embodiments without limitation of the general inventive concept.

## Claims

1. A stereoscopic pictures generating method comprising:
- a providing step during which at least one user related parameter is provided,
- a determining step during which a pictures parameter is determined based on the at least one user related parameter, and
- a generating step during which right and left stereoscopic pictures are generating based on the pictures parameter, the right and left stereoscopic pictures being to be displayed on a screen.

2. The stereoscopic pictures generating method according to claim 1, wherein the at least one user related parameter comprises the interpupillary distance of the user in intermediary vision.

3. The stereoscopic pictures generating method according to claim 1 or 2, wherein the at least one user related parameter comprises the distance between the user and the screen.

4. The stereoscopic pictures generating method according to one of claims 1 to 3, wherein the screen is designed to display right and left videos, each video comprising a set of pictures, the providing step being repeated several times during right and left videos generation.

5. The stereoscopic pictures generating method according to one of claims 1 to 4, wherein the providing step comprises an obtaining operation during which the at least one user related parameter is obtained from a device storing the user related parameter.

6. The stereoscopic pictures generating method according to one of claims 1 to 4, wherein the providing step comprises a measurement operation during which the at least one user related parameter is measured.

7. The stereoscopic pictures generating method according to claim 6, wherein the measurement operation is performed by using right and left cameras embedded in a binocular viewing device designed to be worn by the user.

8. The stereoscopic pictures generating method according to claim 6, wherein the measurement operation is performed by using a camera embedded in the screen.

9. The stereoscopic pictures generating method according to one of claims 1 to 8, wherein the pictures parameter comprises a distance to be set between two cameras embedded in the screen and designed to provide the right and left pictures.

10. The stereoscopic pictures generating method according to one of claims 1 to 9, wherein the pictures parameter comprises a display positioning of the right picture on the screen and a display positioning of the left picture on the screen.

11. The stereoscopic pictures generating method according to one of claims 1 to 10, wherein:
- the providing step comprises:
o a first providing operation during which at least one first user related parameter is provided, and
o a second providing operation during which at least one second user related parameter is provided,
- the determining step comprises:
o a first determining operation during which a first distance to be set between two cameras embedded in a screen facing the second user is determined based on the first user related parameter,
o a second determining operation during which a second distance to be set between two cameras embedded in a screen facing the first user is determined based on the second user related parameter,
- the generating step comprises:
o a first generating operation during which right and left stereoscopic pictures are generating based on the first distance, the right and left stereoscopic pictures being to be displayed on the screen facing the first user,
o a second generating operation during which right and left stereoscopic pictures are generating based on the second distance, the right and left stereoscopic pictures being to be displayed on the screen facing the second user.

12. A computer program product comprising one or more stored sequences of instructions that are accessible to a processor and which, when executed by the processor, causes the processor to carry out the steps of any of claims 1 to 11.

13. A computer readable medium carrying one or more sequences of instructions of the computer program product of claim 12.

14. A stereoscopic pictures generating system comprising:
- providing means configured to provide at least one user related parameter,
- determining means configured to determine a pictures parameter based on the at least one user related parameter, and
- generating means configured to generate right and left stereoscopic pictures based on the pictures parameter, the right and left stereoscopic pictures being to be displayed on a screen.
